# EUROPEAN PATENT APPLICATION

(11) **EP 1 834 727 A2**
(43) Date of publication of application: **19.09.2007**
(21) Application number: 07103911.9
(22) Date of filing: 12.03.2007
(51) Int. Cl.: B23K 20/06, B23K 101/00

(54) **Method of applying a coating to an article via magnetic pulse welding**

(30) Priority: 14.03.2006 US 375177
(71) Applicant: The General Electric Company, Schenectady NY 12345 (US)
(72) Inventor: HELMICK, David A., Fountain Inn, SC 29644 (US); BURIN, David Leslie, Greer, SC 29651 (US)
(74) Representative: Szary, Anne Catherine

(57) **Abstract**

Disclosed herein is a method of applying a coating (12) to an article (16). A coating material (12) is disposed on an article (16). The coating material (12) is accelerated towards the article (16). A solid-phase bond is formed between the coating material (12) and the article (16).

## Description

### TECHNICAL FIELD

This application relates generally to applying a coating to articles, and more specifically, to an improved method of applying a coating to an article, which alleviates oxide formation and minimizes interface contamination.

### BACKGROUND OF THE INVENTION

Coatings capable of wear resistance and reducing the effects of high temperatures are applied to components exposed to harsh operating conditions. Application of wear resistant and environmental resistant coatings provides for improved reliability and longer component life by reducing wear of the base material and maintaining material properties at increased temperatures.

Commonly these coatings are applied by thermal spraying processes, which include detonation gun deposition, high velocity oxy-fuel deposition (HVOF) and its variants such as high velocity air-fuel, plasma spray, flame spray, and electric wire arc spray. In most thermal coating processes a material in powder, wire, or rod form (e.g., metal) is heated to near or somewhat above its melting point and droplets of the material are accelerated in a gas stream. The droplets are directed against and impinge on the surface of an article to be coated where they adhere and bond to the article.

While such processes as exemplified above do result in the coating of a target component, they also tend to facilitate interface contamination and oxide formation within the coating due to the high temperatures experienced by the casting and/or components being coated. Interface contamination and oxide formation results in reduced effectiveness and shorter life of the coating, which can contribute to premature failure and shortened effective operating life of the underlying component.

Further to the foregoing, thermal spraying processes require large fixtures, machinery and dedicated facilities, along with skilled technicians to set up and operate them. Without the ability to perform these operations in the field, valuable schedule time and added costs associated with transporting the components to a coating facility are incurred when a coating operation is desired. Additionally, some thermal spraying processes require a subsequent heat treatment for stress relieving purposes, which also requires large equipment (i.e. ovens). Resultingly, current processes do not allow coating operations to be performed in the field rather requiring the aforesaid transportation of the component to an overhaul or maintenance facility.

Accordingly, there is a need for developing a simplified coating application process that alleviates oxide formation within the coating and minimizes interface contamination.

### BRIEF SUMMARY OF THE INVENTION

Disclosed herein is a method of applying a coating to an article. A coating material is disposed on an article. The coating material is accelerated towards the article. And, a solid-phase bond is formed between the coating material and the article.

Further disclosed herein is a method of applying a coating to an article. A coating material is disposed on an article. The coating material is accelerated towards the article at room temperature. And, a bond is formed between the coating material and the article.

Yet further disclosed herein is a coated article having an interface between the coating and article substantially devoid of contaminants. The coated article is produced by loosely wrapping the article in a coating material. A magnetic field is created in the coating material. The coating material is accelerated toward the article with the magnetic field. And the article is impacted with the coating material to thereby fuse the coating material to the article.

### BRIEF DESCRIPTION OF THE DRAWINGS

Referring to the drawings wherein like elements are numbered alike in the several Figures:
FIGURE 1 is a front perspective view of an airfoil;
FIGURE 2 is a schematic cross section view of an article coated by a high temperature process; and
FIGURE 3 is a schematic cross section view of an article coated by an exemplary room temperature process as disclosed herein.

### DETAILED DESCRIPTION OF THE INVENTION

Protective coatings are applied to articles exposed to harsh operating environments. These coatings provide the article with improved heat and corrosion resistance and greater wear resistance without the loss of strength. The ability to apply these coatings to articles without introducing harmful contaminants or excessive heat to the coating material allows for these coatings to remain effective throughout the planned life cycle of the articles they protect.

The method of applying coatings to articles pursuant to this disclosure is useful with a wide variety of parts and components, for example articles comprising a variety of metals and metal alloys. In various embodiments, these parts and components are operated at, or are exposed to extreme conditions, as found in, for example, but not limited to, aerospace and power generation applications. These parts and components can include turbine airfoils such as blades and vanes, combustor components such as liners and deflectors, and the like. The application of these coatings can also be performed on a portion or the entire article. For example, with regard to airfoils such as blades, the coatings can be used to protect portions of the airfoil rather than the entire airfoil, for example the coating can cover the leading and trailing edges and other surfaces of the airfoil, but not the attachment area where the airfoil is attached to a hub. While the following discussion of the method for applying coatings will be with reference to metal articles which form parts and components used in aerospace and power generation applications, it should be understood that the method of applying these coatings is useful with other articles that operate at, or are exposed to, harsh operating conditions.

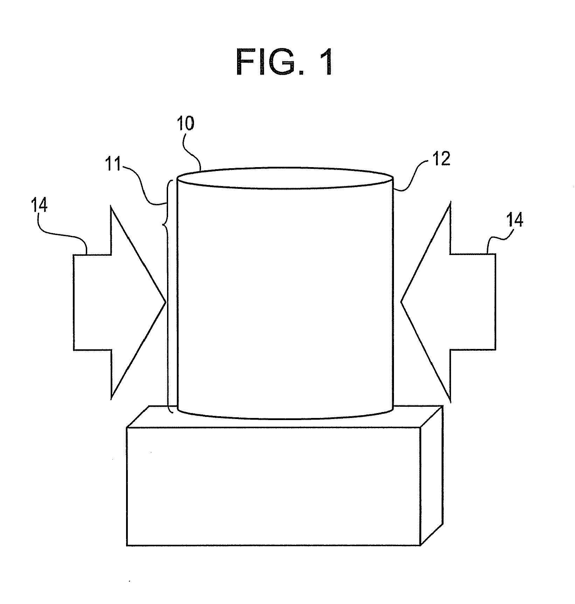

A schematic representation of an airfoil is shown in Figure 1. An exemplary method of applying a coating material 12 to the airfoil 10 is performed by loosely wrapping a portion 11 of the airfoil 10 to be coated with a thin layer of the coating material 12. In one embodiment, for example, the coating material 12 may be in foil or tape form having thickness ranges between about 0.005 in. to about 0.040 in., but it is to be understood that any range of thickness (bounded only by practicality) may be used. The portion 11 of the airfoil 10 (along with the surrounding coating 12) to be coated is then positioned within an inductive coil. When the inductive coil is energized, current flows through the inductive coil creating a high intensity electromagnetic field around the inductive coil. The high intensity electromagnetic field generates eddy currents in the coating material 12. The strong current generated by the inductive coil and the eddy currents induced in the coating material 12 create very strong opposing magnetic fields. These strong opposing magnetic fields repel one another and the coating material 12 is forced away from the inductive coil at a very high velocity toward the airfoil 10 producing a high velocity impact between the coating material 12 and the airfoil 10. The high velocity impact between the coating material 12 and the airfoil 10, forces the coating material 12 to collapse about the airfoil 10, thereby resulting in a bond between the coating material 12 and the airfoil 10.

Solid-state processes, such as magnetic pulse welding, are those, which through a combination of deformation and/or diffusion allow joining to be accomplished without molten and re-solidified material in the bond area. Magnetic pulse welding is performed at room temperature conditions, without the need for heat inputs (i.e. flame, torch, electric arc, etc.) common to conventional thermal spraying processes. The high velocity impact between the two materials to be magnetic pulse welded produces a series of progressive shock waves that deform the mating surfaces at the moment of impact resulting in a solid-phase bond (that is, a bond where there is no occurrence of melting) between the two materials.

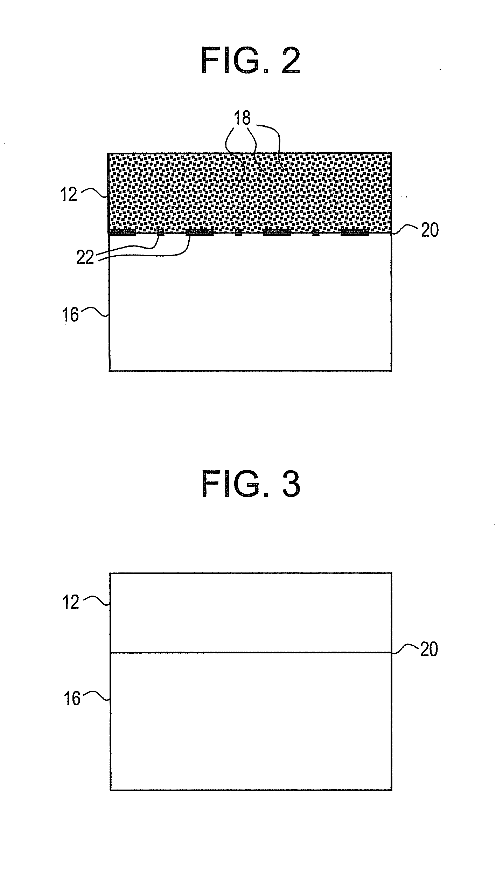

Significant advantages in coating durability are attained by applying coatings at room temperature conditions. Referring to Figure 2, a cross section of an article 16 coated by a high temperature process is illustrated. Coating applications performed by high temperature processes, as noted above, allow for the formation of oxides 18 (considered to be defects) within the coating material 12. Conventional methods of applying coating materials 12 attempt to control the production of oxides 18 by controlling the temperature at which the application is performed. However, inevitably, some air becomes entrained in the thermal spray stream and gives rise to oxide content within the coating. Conventional methods require a temperature sufficient to soften/melt the coating particles so that they adhere to the article 16. When temperatures approach or exceed the melting point of the coating material, oxygen is absorbed and diffuses into the droplets of the coating material as it is accelerated in the gas stream and ultimately deposited on the surface of the article to be coated. Therefore, temperatures approaching the melting point of the coating material 12 produce undesirable oxide-promoting environments.

Still referring to Figure 2, conventional spraying processes inherently result in interface contamination 22 at the coating/article interface 20. Conventional spraying processes require a surface preparation, such as a grit blast operation for example, prior to the application of the coating material. Inevitably, contaminants from the surface preparation, such as grit from the grit blasting operation, remain on the article, which then become trapped at the coating/article interface 20. To obtain strong bonds between the coating material 12 and the article 16, it is preferable that the surface of the article 16 to be coated be free of contaminants. The method disclosed herein does not require surface preparations, such as grit blasting, and therefore minimizes entrapped contaminants. Additionally, the method disclosed herein further minimizes interface contamination 22 as a jetting action, between the collapsing coating material 12 and the article 16, acts to clean the surface of the article 16 by carrying away surface contaminants.

Referring to Figure 3, a cross section of an article 16 coated by the disclosed room temperature method is illustrated. The solid-phase bond between the coating material 12 and the article 16 is achieved by magnetic forces, requiring no heat input, and therefore alleviating oxide formation within the applied coating material 12. Further, the carrying away of surface contaminants by the disclosed method, as noted above, minimizes interface contamination at the coating/article interface 20. Alleviating oxide 18 formation and minimizing interface contamination 22 improves the effectiveness of the coating by exhibiting enhanced bond strength, therefore adding to product quality and longevity.

Another significant advantage attained by the disclosed method is that a subsequent heat treatment of the coated article in not required. High temperature processes may induce stress in the application regions and therefore require a stress relieving operation. The room temperature field applicable method disclosed herein does not induce stress and thus simplifies the overall coating process. Further, the simplification of the coating process provides for reduced cycle times and lower cost.

While the invention has been described with reference to a preferred embodiment or embodiments, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment disclosed as the best mode contemplated for carrying out this invention, but that the invention will include all embodiments falling within the scope of the claims.

## Claims

1. A method of applying a coating to an article (16), the method comprising:
disposing a coating material (12) on an article (16);
accelerating the coating material (12) towards the article (16); and
forming a solid-phase bond between the coating material (12) and the article (16).

2. The method of claim 1 wherein the accelerating of the coating material (12) further comprises inducing eddy currents into the coating material (12).

3. The method of claim 1 wherein the accelerating of the coating material (12) further comprises creating a magnetic field between the coating material (12) and the article (16).

4. The method of claim 1 wherein the disposing of the coating material (12) further comprises wrapping a tape or foil form of the coating material (12) on to the article (16).

5. A method of applying a coating to an article (16), the method comprising:
disposing a coating material (12) on an article (16);
accelerating the coating material (12) towards the article (16) at room temperature; and
forming a bond between the coating material (12) and the article (16).

6. The method of claim 5 wherein the accelerating of the coating material (12) towards the article (16) at room temperature further comprises alleviating oxide (18) formation within the coating material (12) through said accelerating at room temperature.

7. The method of claim 5 or claim 6 wherein the accelerating of the coating material (12) further comprises creating a magnetic field between the coating material (12) and the article (16).

8. The method of claim 5 wherein the disposing of the coating material (12) further comprises wrapping a tape or foil form of the coating material (12) on to the article (16).

9. A coated article (16) having an interface (20) between the coating and article (16) substantially devoid of contaminants, said coated article (16) being produced by:
loosely wrapping the article (16) in a coating material (12);
creating a magnetic field in the coating material (12);
accelerating the coating material (12) toward the article (16) with the magnetic field; and
impacting the article (16) with the coating material (12) to thereby fuse the coating material (12) to the article (16).

10. The article (16) of claim 9 wherein the coating material (12) is applied at room temperature.
